# EUROPEAN PATENT APPLICATION

(11) **EP 2 947 755 A1**
(43) Date of publication of application: **25.11.2015**
(21) Application number: 15161120.9
(22) Date of filing: 26.03.2015
(51) Int. Cl.: H02K 3/47, H02K 5/173, H02K 15/06, H02K 1/02

(54) **Electric motor**

(30) Priority: 07.04.2014 IT FI20140077
(71) Applicant: Imer International S.p.A., 53036 Poggibonsi (SI) (IT)
(72) Inventor: Bertini, Antonio, I50052 Certaldo (FI) (IT); Bandini, Leandro, I50052 Certaldo (FI) (IT)
(74) Representative: Mincone, Antimo

(57) **Abstract**

Slotless electric motor, comprising an outer casing (CE) with upper and lower bases (BU, BL), a shaft (A) carried by bearings (CU) inserted in said bases (BU, BL), a stator unit, a rotor unit (GR), and terminals (10) for supplying electric current to the stator unit,. The stator unit is made up of multiple windings (T, S, R) arranged concentrically with respect to the longitudinal axis of the rotor unit (GR), each at a different radial distance from said axis.

## Description

The present invention relates to an electric motor, in particular of the slotless type.

The brushless motors of the slotless type have a particular stator structure that avoids the use of slots for the corresponding windings. The absence of teeth terminals of the slots prevents the occurrence of forces of attraction between the stator and the rotor in motion, so that the so-called "cogging" is avoided. Moreover, the distribution of the magnetic induction in the air gap is very close to the ideal distribution. This type of technology allows to obtain a very linear torque/speed curve, with the motor torque proportional to the current and the speed proportional to the voltage. The losses in the magnetic circuit are relatively small.

Slotless electric motors are disclosed for example in US 2007/176509 and WO 2004/012321.

The present invention aims to provide a slotless motor structurally simple and reliable, relatively light in weight, not expensive and which can be assembled with relative ease even by personnel not particularly skilled and without the use of special or dedicated machines.

This result is achieved, according to the present invention, by adopting the idea of making a slotless motor having the characteristics indicated in claim 1. Other features of the present invention are object of the dependent claims.

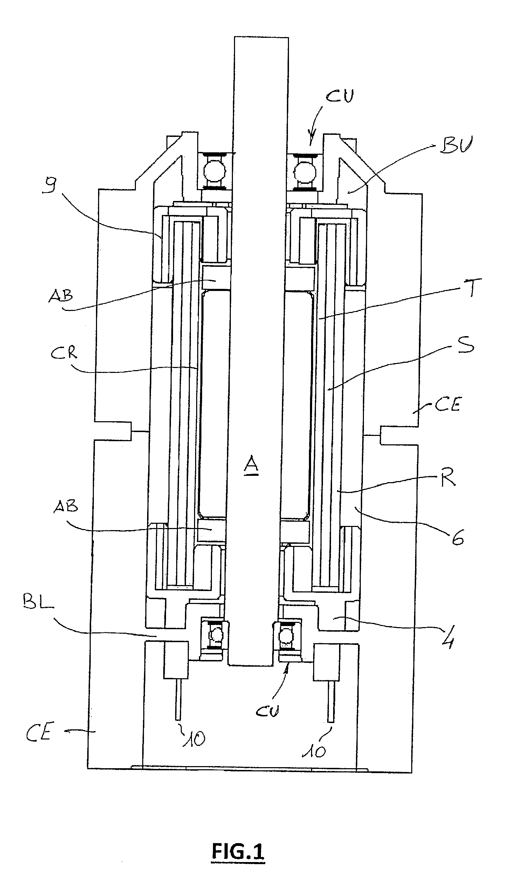

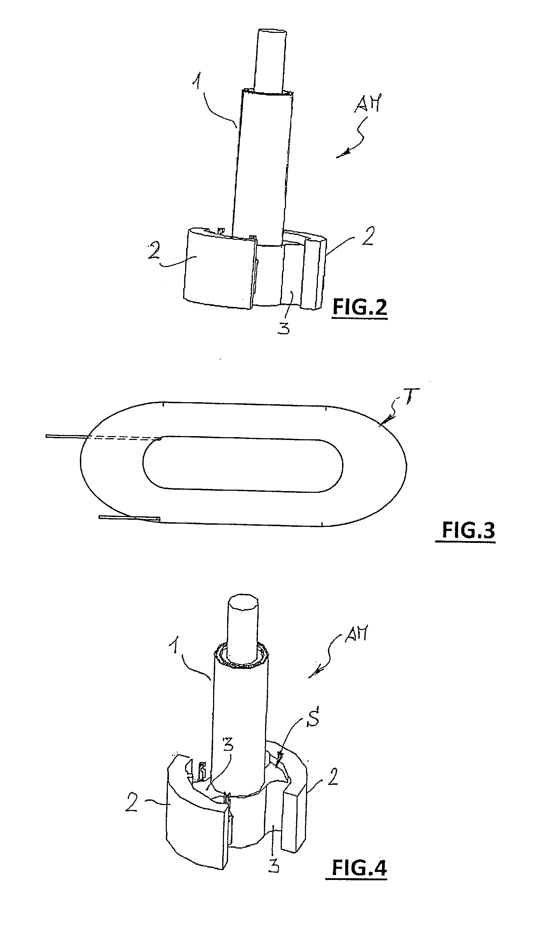

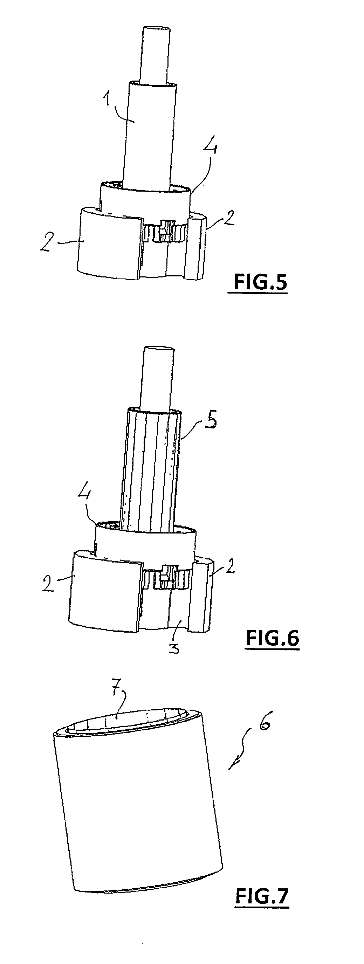

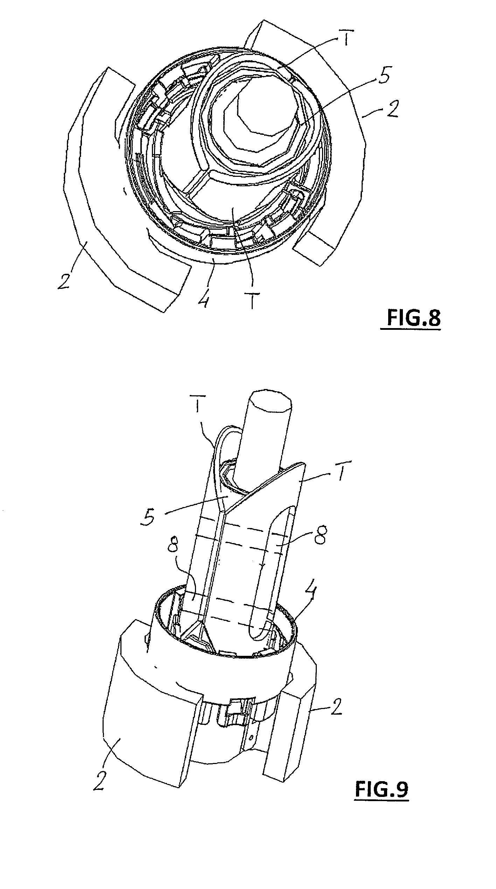

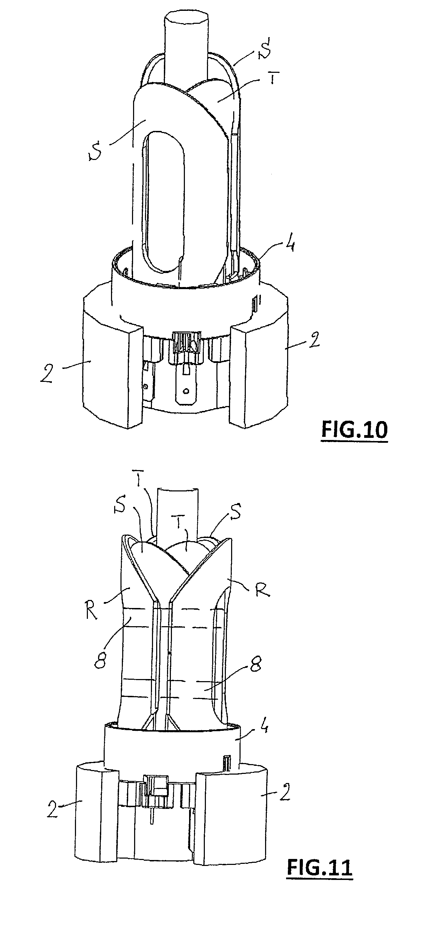

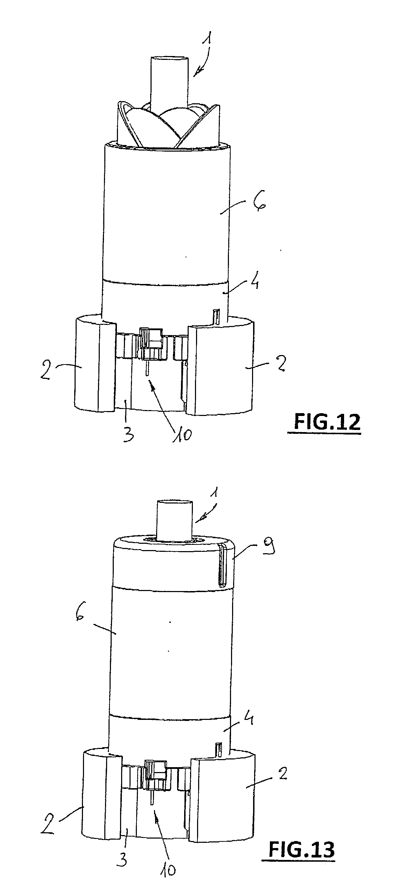

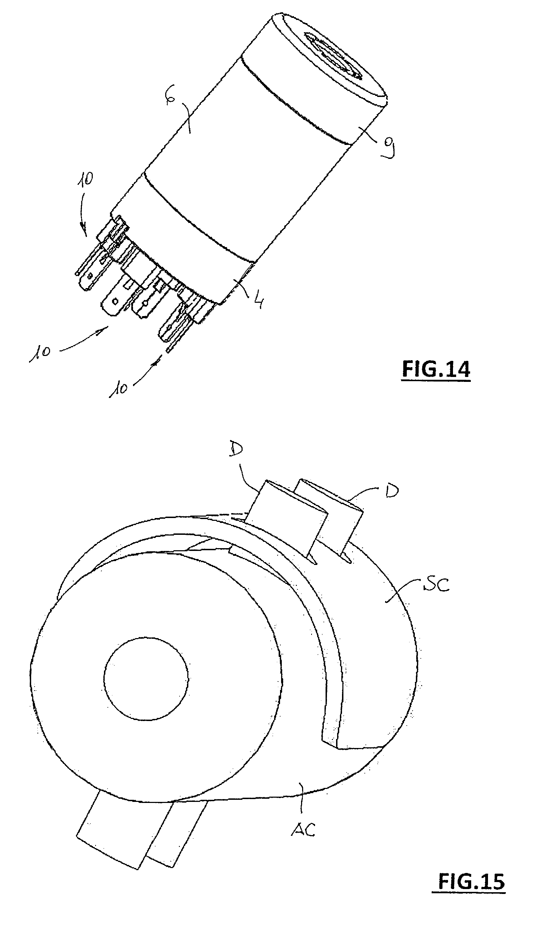

The following description provides an example of a slotless motor in accordance with the present invention and is referred to the attached drawings, provided by way of example but not to be considered in a limiting sense, in which:
▪ Fig.1 is a schematic longitudinal sectional view of a slotless electric motor in accordance with the present invention, in which some parts are omitted to better illustrate others;
▪ Figs. 2 to 15 schematically show a sequence of steps regarding the assembly of the stator of the motor shown in Fig.1.

Reduced to its essential structure and with reference to Fig.1 of the accompanying drawings, an electric motor in accordance with the present invention comprises an outer casing EC with upper and lower bases BU, BL, a shaft A carried by bearings CU inserted in said bases BU, BL, a stator unit T, S, R, a rotor unit GR, and power terminals 10 for the stator unit GS .

The stator windings T, S and R are all formed in the same way, by providing for the crimping of a power terminal 10 of the faston type on a head of each winding where the enamel of the respective wire has been removed. Each winding is duplicated, in the sense that are formed of a pair of windings T, a pair of windings S and a pair of windings R.

The windings T, S and R are then assembled with the aid of a tool "AM" comprising a cylindrical stem 1 emerging from a base formed by two segments 2 with a "C"-shaped profile joined to the stem 1 by corresponding radial projections 3 of lower height, so as to form a substantially annular seat S in the vicinity of the lower base of the stem 1. The latter is coated with dielectric material, such as Mylar.

A predetermined amount of nonstick grease is distributed on said stem and on said seat formed on the tool AM, then a faston-holder ring 4 is positioned on said seat S, and subsequently an insulating sock 5 is fitted onto the stem 1.

For the preparation of the magnetic yoke 6, a sheet of insulating material 7 (e.g. Nomex) is glued inside the magnetic yoke 6 so that the Nomex sheet 7 protrudes by a predetermined value (for example , 3 mm) beyond the top edge of the yoke magnetic 6.

Subsequently, on one of the output conductors of the two windings T is inserted an insulating tube (for example having diameter of 4 mm), then said terminals are crimped and the crimping is covered with an insulating sheath. Then the upper part and the lower part of the same winding are tied with a turn of adhesive tape 8 so as to lock the terminals and the junction of the output conductors, avoiding overlapping of the tape ends, and such that the terminals do not protrude from the encumbrance of the windings themselves.

The same procedure is applied for the windings S and, after having mounted an NTC probe (not visible in the drawings), for the windings R.

In a further assembling step, the magnetic yoke (6) is positioned on the windings T, S, R and, above the magnetic yoke (6), a cup 9 is positioned such that the latter covers the windings.

In a final step, the tool AM is overturned and a given amount of resin is poured inside it through a radial hole exhibited by the ring 4 until the complete filling of the spaces between the windings T, S, R, the yoke 6, the faston-holder ring 4 and the cap 9; then, the resin is allowed to dry and the complex of these components is removed from the tool AM exerting a slight twist to facilitate the detachment.

Each pair of windings T, R, S is formed by two coils of enamelled copper wire on opposite sides of the longitudinal axis of the drive shaft A, thus forming three pairs of concentric coils around said axis. In other words, the windings of each pair are on the same circumference. The windings T, S, R are angularly distanced by 120 °.

To favor the formation of such an arrangement, each of the windings T, R, S is realized by flat coils (in which one dimension is negligible compared to the other two) and then made concave, with the concavity that in the assembled condition is turned towards the axis of shaft A.

To realize the said windings, preferably use is made of known self-conforming copper wound on a concave shield SC that reproduces the shape of the desired winding in cooperation with a cylindrical core AC: the outer radius of the core AC defines the inner radius of the winding , while the inner radius of the shield SC defines the respective outer radius. Two spacers D positioned between the shield and the soul SC AC determine the formation of a central longitudinal window in the winding. The very winding is made with a winding machine known per se which works on such equipment. Subsequently, a current of predetermined intensity is made to flow in the winding (or the latter is placed in an oven at a predetermined temperature), so that the winding definitively acquires the shape thus conferred.

For example, the magnetic yoke 6 can be sintered.

For example, the rotor unit GR is made of plastoneodymium and is insterted in a capsule CR that can be provided, optionally, with an upper and a lower balancing ring AB.

For example, the thickness of each winding can be of the order of 2 mm.

Thus, a slotless electric motor according to the present invention comprises an outer casing (CE) with upper and lower bases (BU, BL), a shaft (A) carried by bearings (CU) inserted in said bases (BU, BL), a stator unit, a rotor unit (GR), and terminals (10) for supplying electric current to the stator unit, and the stator unit is made up of windings (T, S, R) arranged concentrically with respect to the longitudinal axis of the rotor unit (GR), each at a different radial distance from said axis, such that each winding (T, S, R) forms a stator pole and each stator pole is at a different radial distance from said axis.

Therefore, the stator unit has, according to the example shown in the drawings, an inner stator pole formed by windings T that is closer to the axis of the shaft A and the rotor unit GR compared to the stator poles formed by windings R and S; an outer stator pole R that is more distanced from said axis compared to the stator poles formed by windings T and S; and an intermediate stator pole formed by windings S.

Among the advantages offered by the present invention there are the following: the windings T, S, R are produced separately from each other; there is no overlap or crossings of the copper of a winding with the copper of the other windings, i.e., the windings T, S, R are electrically separated from one another in the finished electric motor; it is therefore possible to realize an electric motor more compact and more powerful; it is possible to simplify the head portion of each winding to the point that it can be contained inside the stator yoke.

In practice the details of execution may vary in any equivalent way as for what concerns the disposition and conformation of the individual elements described and illustrated, and the nature and composition of the materials indicated, without departing from the scope of the adopted solution and thereby, remaining within the limits of the protection granted by this patent.

## Claims

1. Slotless electric motor, comprising an outer casing (CE) with upper and lower bases (BU, BL), a shaft (A) carried by bearings (CU) inserted in said bases (BU, BL), a stator unit, a rotor unit (GR), and terminals (10) for supplying electric current to the stator unit, **characterized in that** the stator unit is made up of windings (T, S, R) arranged concentrically with respect to the longitudinal axis of the rotor unit (GR), each at a different radial distance from said axis, such that each winding (T, S, R) forms a stator pole and each stator pole is at a different radial distance from said axis.

2. Electric motor according to claim 1 **characterized in that** each of said windings (T, S, R) is constituted by a pair of coils that are counter-facing arranged with respect to said axis.

3. Electric motor according to claim 1 or 2 **characterized in that** on said windings (T, S, R) is fitted a magnetic yoke (6) which surrounds the same windings (T, S, R).

4. Electric motor according to claims 1 and 3 **characterized in that** each of said coils is concave, with the concavity facing said axis.

5. Electric motor according to claim 4 **characterized in that** each of said coils has a dimension that is lower than the other two dimensions.

6. Electric motor according to claim 3 **characterized in that** the said yoke (6) is sintered.

7. Electric motor according to claim 1 **characterized in that** the said windings (T, S, R) are arranged concentrically with respect to the longitudinal axis of the rotor unit (GR), each at a different radial distance from said axis, without overlapping with each other.

8. Electric motor according to claim 1 **characterized in that** the rotor unit (GR) is made of plasto-neodymium.
